# FASCICULE DE BREVET EUROPEEN

(11) **EP 0 871 096 B1**
(45) Date de publication et mention de la délivrance du brevet: **12.03.2003**
(21) Numéro de dépôt: 97105712.0
(22) Date de dépôt: 07.04.1997
(51) Int. Cl.: G04G 9/00, G01C 21/20

(54) **Pièce d'horlogerie comprenant un récepteur GPS, destinée à indiquer la direction d'un endroit "but"**
Zeitmessgerät mit GPS-Empfänger zur Anzeige der Richtung eines Zielorts
Timepiece containing a GPS receiver for indicating the direction to a target location

(43) Date de publication de la demande: 14.10.1998
(73) Titulaire: ASULAB S.A., 2074 Marin (CH)
(72) Inventeur: Farine, Pierre-André, 2003 Neuchâtel (CH)
(74) Mandataire: Patry, Didier Marcel Pierre

(56) Documents cités:
- WO-A-96/21139
- GB-A- 2 242 027
- US-A- 5 173 709
- PATENT ABSTRACTS OF JAPAN vol. 011, no. 173 (P-582), 4 juin 1987 & JP 62 005123 A (HITACHI LTD;OTHERS: 01), 12 janvier 1987,

## Description

La présente invention concerne une pièce d'horlogerie comprenant un récepteur GPS, destinée à indiquer la direction d'une destination ou d'un endroit "but" à partir d'un endroit "source" où se situe le récepteur GPS.

On connaît déjà des pièces d'horlogerie propres à indiquer une direction particulière. A titre d'exemple, on peut mentionner la demande de brevet européen EP-A1-0 721 155 dans laquelle est décrite une pièce d'horlogerie agencée pour indiquer la direction de La Mecque. Cette demande décrit une pièce d'horlogerie analogique qui incorpore une boussole utilisée pour fournir un axe de référence (qui est fourni par la direction du nord magnétique).

Un problème que l'on rencontre alors dans une pièce d'horlogerie comprenant une boussole, réside dans le fait que l'aimant permanent associé à la boussole est perturbé par l'environnement magnétique de l'ensemble de la pièce d'horlogerie. Ce problème devient particulièrement gênant quand le mouvement horloger comporte des masses magnétiques. Une solution incomplète de ce problème. consiste alors à éloigner l'aimant permanent des masses magnétiques, c'est-à-dire à augmenter l'encombrement de la pièce d'horlogerie, ce qui va à l'encontre de la préoccupation constante des horlogers. En outre, de telles pièces d'horlogerie n'apportent pas une solution simple pour déterminer la direction d'un endroit "but". En effet, cette détermination doit tenir compte de données physiques complexes comme la déviation entre le nord magnétique et le nord géographique.

Une difficulté pour les fabricants de pièces d'horlogerie consiste à réaliser un agencement d'une telle pièce qui permettent de fournir la direction souhaitée, tout en se préoccupant des contraintes habituelles dans l'industrie horlogère, tel que l'encombrement.

Une solution classique à la difficulté susmentionnée, consiste à incorporer, dans une pièce d'horlogerie analogique, un récepteur dit GPS. On rappelle brièvement que l'abréviation GPS désigne un dispositif relié au Système de Positionnement Global, qui typiquement reçoit d'un satellite des données de coordonnées et d'heure. A titre d'exemple, ce récepteur a besoin de recevoir des signaux émis par quatre satellites différents, pour déterminer une localisation dans un espace à trois dimensions (latitude, longitude et altitude). La structure et le fonctionnement d'un tel récepteur sont largement décrits dans l'état de la technique, notamment dans "Radionavigation Systems" de Börje Forssell.

A titre d'exemple, on peut citer la demande de brevet internationale WO 96/21139. En effet, ce document mentionne le fait qu'un récepteur GPS peut être utilisé dans une pièce d'horlogerie analogique, sans qu'une boussole soit également utilisée dans cette pièce. En se référant à la figure 2 de ladite demande de brevet internationale, les aiguilles de ladite pièce d'horlogerie indiquent un angle W, ce qui permet à l'utilisateur de cette pièce de se déplacer en direction d'un endroit but Pn, donné par la position précédente de l'utilisateur.

On peut également citer le document GB 2 242 027 décrivant une boussole électronique pouvant être utilisée comme une boussole conventionnelle afin de déterminer une orientation par rapport au nord magnétique.

Le document US 5,173,709 décrit un dispositif de navigation comprenant un affichage sur lequel un pointeur est affiché, ce pointeur indiquant une direction désirée.

Le document JP 62 005123 décrit également un système de navigation selon lequel une direction de mouvement est calculée à partir des positions actuelles et précédentes de l'utilisateur, et une direction de but est calculée à partir de la position actuelle de l'utilisateur et de sa destination.

Néanmoins, la Demanderesse de la présente invention a noté qu'un récepteur GPS agencé dans une pièce d'horlogerie analogique, ne permet pas à lui-seul la fourniture de la direction de l'endroit but que l'utilisateur de cette pièce souhaite connaître. En effet, la Demanderesse de la présente invention observe que ledit récepteur GPS permet de fournir les coordonnées de la position spatiale dudit utilisateur, c'est-à-dire la direction de l'endroit but dans le référentiel formé par les quatre satellites, les coordonnées de l'endroit but ayant été stockées au préalable dans ledit récepteur GPS. Autrement dit, ledit utilisateur a besoin d'avoir recours à un axe de référence, par rapport auquel la direction de l'endroit peut être effectivement définie.

Un objet de la présente invention est de pallier les inconvénients susmentionnés en prévoyant une pièce d'horlogerie destinée à indiquer la direction d'un endroit "but", sans avoir recours à une boussole.

Un autre objet de la présente invention est de prévoir une telle pièce d'horlogerie qui répond aux critères traditionnels d'esthétique et de confort pour une application horlogère .

Ces objets ainsi que d'autres sont atteints par la pièce d'horlogerie selon la revendication 1.

Un avantage de la présente invention est de fournir une telle pièce d'horlogerie qui fonctionne principalement à partir des coordonnées fournies par le récepteur GPS, quand l'utilisateur de cette pièce se déplace sur une distance de quelques mètres. En effet, un tel déplacement fournit, via le récepteur GPS, une direction de marche qui peut servir d'axe de référence par l'intermédiaire de l'axe 6 h-12 h de ladite pièce d'horlogerie analogique, si l'utilisateur se déplace en maintenant son bras comme s'il lisait continûment l'heure. Autrement dit, l'axe 6 h-12 h est utilisé en tant qu'axe de référence, ce qui permet de ne pas avoir recours à une boussole par exemple.

Un autre avantage de la présente invention est de fournir une telle pièce d'horlogerie dont la structure est plus simple que les montres antérieures susmentionnées.

Un autre avantage de la présente invention est de fournir une telle pièce d'horlogerie dont les composants peuvent être intégrés dans une structure peu encombrante, ce qui rend la pièce d'horlogerie plus esthétique par rapport aux montres-bracelets antérieures susmentionnées.

Les objets, caractéristiques et avantages de la présente invention apparaîtront plus clairement à la lecture de la description détaillée d'un mode de réalisation préféré de l'invention, donné à titre d'exemple uniquement, en relation avec les figures jointes, parmi lesquelles :
- la figure 1 représente un mode de réalisation préféré d'une pièce d'horlogerie selon la présente invention;
- la figure 2 représente un schéma fonctionnel sous forme de blocs de la structure interne d'une pièce d'horlogerie selon la présente invention;
- la figure 3 représente de façon schématique une vue en perspective d'un mode de fonctionnement préféré d'une pièce d'horlogerie selon la présente invention; et
- la figure 4 représente de façon schématique une vue de dessus de la figure 3.

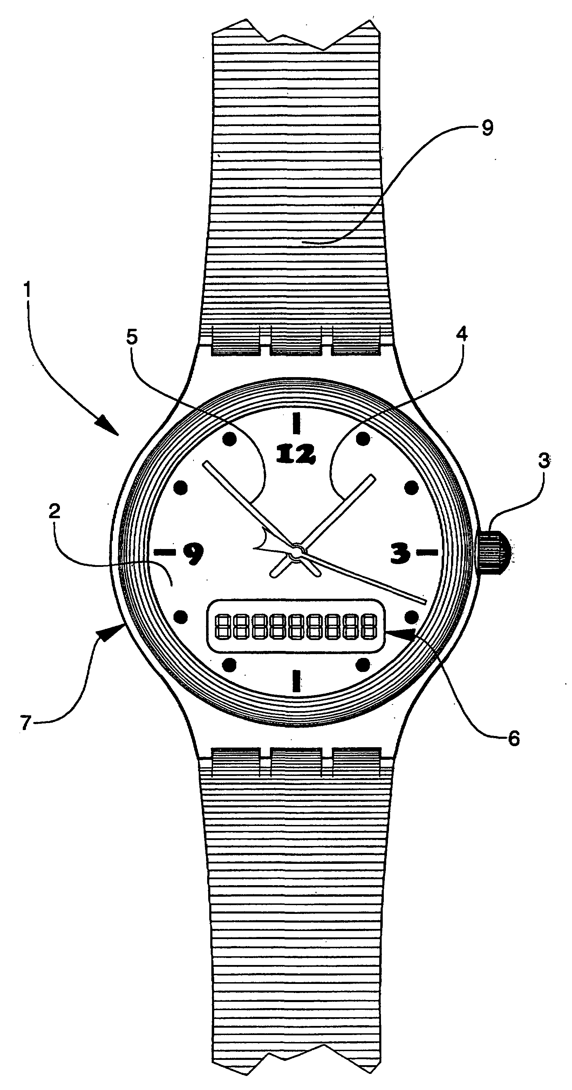

De façon générale, une pièce d'horlogerie selon la présente invention est utilisée dans une montre-bracelet représentée schématiquement en figure 1.

La pièce d'horlogerie selon la présente invention est comprise dans une montre-bracelet 1 multi-fonctions constituée typiquement d'un cadran 2, d'une couronne 3, d'une première aiguille 4 indiquant par exemple les heures, d'une seconde aiguille 5 indiquant par exemple les minutes et de moyens d'affichage 6 du type décrit dans la demande de brevet européen No 91108796.3 au nom d'Eta SA. Ces différents composants sont inclus dans un boîtier ou structure 7 attaché à un bracelet 9.

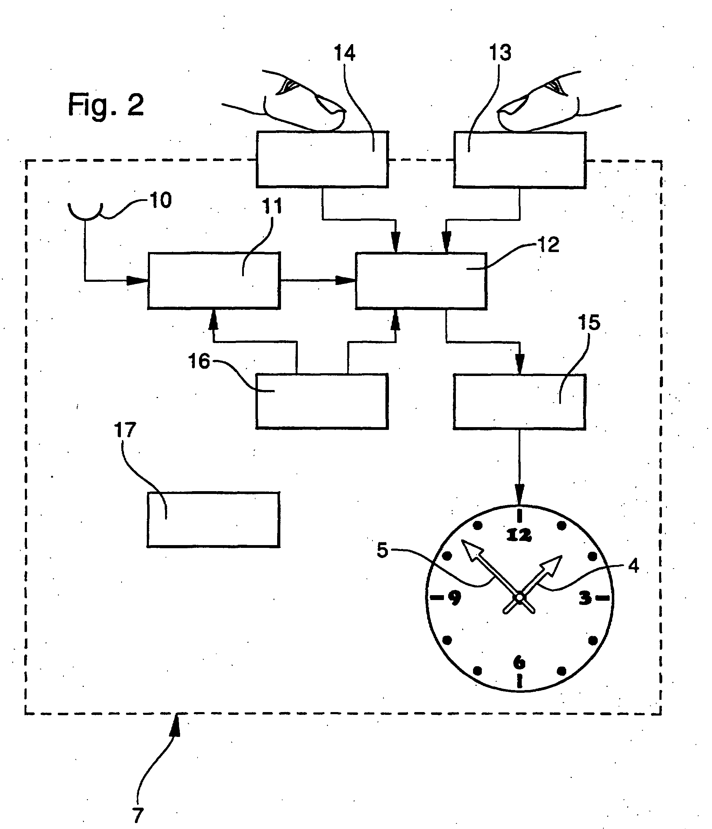

La figure 2 représente un schéma fonctionnel sous forme de blocs de la structure interne d'une pièce d'horlogerie selon la présente invention, dont un mode de réalisation préféré est représenté en figure 1.

Pour l'essentiel, en plus des éléments susmentionnés en relation avec la figure 1, la structure 7 comprend aussi une antenne 10, un récepteur GPS 11, des moyens de traitement de données 12, des moyens de sélection 13, des moyens d'introduction de données 14, un moteur 15, une horloge interne 16 et une source d'alimentation 17.

L'antenne 10 est agencée de façon à pouvoir recevoir des signaux émis par un satellite, et comprend une sortie connectée à une première entrée du récepteur GPS 11, et peut constituer avantageusement une partie ou la totalité du cadran 2.

De préférence, le récepteur GPS 11 peut utiliser avantageusement des filtres à onde élastique (couramment appelés filtres SAW) dans la pièce d'horlogerie selon la présente invention. En effet, par rapport à des filtres classiques (par exemple des filtres en céramique), un filtre SAW fournit des caractéristiques électriques semblables telle que l'atténuation, tout en ayant une taille plus petite, ce qui est particulièrement avantageux pour des applications horlogères.

La sortie du récepteur GPS 11 est connectée à une première entrée des moyens de traitement de données 12, typiquement un microprocesseur. Les moyens de traitement de données 12 comprennent une deuxième entrée connectée à la sortie des moyens de sélection 13 propres à être actionnés par l'utilisateur de la pièce d'horlogerie, une troisième entrée connectée à la sortie des moyens d'introduction de données 14, et une sortie connectée à une entrée du moteur 15 relié aux aiguilles 4 et 5, et agencé de façon à entraîner les aiguilles 4 et 5. Une quatrième entrée des moyens de traitement de données 12 est reliée à l'horloge interne 16, comme cela est décrit ultérieurement.

Les moyens de sélection 13 peuvent être constitués d'un bouton poussoir monté dans le boîtier 7 à la périphérie du cadran 2 ou, de préférence, au mécanisme de la couronne 3, lesdits moyens de sélection 13 étant agencés pour pouvoir sélectionner différentes fonctions.

Les moyens d'introduction de données 14, servant à fournir aux moyens de traitement de données 12 les coordonnées de l'endroit "but", c'est-à-dire la longitude, la latitude et l'altitude, sont réalisés de façon classique. A titre d'exemple, on peut citer les solutions suivantes de l'art antérieur. Dans le cas où la pièce d'horlogerie est une montre-bracelet, la demande de brevet européen No 95117979.5 au nom de la demanderesse de la présente demande décrit des premiers moyens d'introduction par défilement de villes, de régions ou pays qui sont affichés sur un affichage à cristaux liquides lorsque la couronne de la montre-bracelet est entraînée en rotation. La même demande de brevet décrit des seconds moyens d'introduction comprenant un cadran mobile muni de plusieurs repères correspondant à plusieurs villes importantes inscrites chacune à proximité du repère respectif. Dans ce cas, il suffit à l'utilisateur de la montre-bracelet de sélectionner une des villes sur le cadran en alignant l'aiguille des minutes sur le repère correspondant.

En outre, comme cela est connu dans la technique, l'homme de l'art peut utiliser pour le moteur 15 un moteur pas à pas et, de préférence, un moteur à double sens pour permettre une rotation des aiguilles 4 et 5 dans les deux sens.

L'horloge interne 16 (typiquement une base de temps associée à un cristal de quartz) a une première sortie connectée à une seconde entrée du récepteur GPS 11, et une seconde sortie connectée à la quatrième entrée des moyens de traitement de données 12 pour fournir un signal temporel.

Les différents composants de la structure 7 représentée en figure 2 sont alimentés en tension par une source d'alimentation 17 telle qu'une pile.

La structure du type représenté en figure 2 présente de nombreux avantages. Ainsi, l'utilisation d'un moteur à double sens permet une rotation des aiguilles dans les deux sens, ce qui permet de définir un mouvement élaboré des aiguilles, mais aussi de réduire la consommation d'énergie.

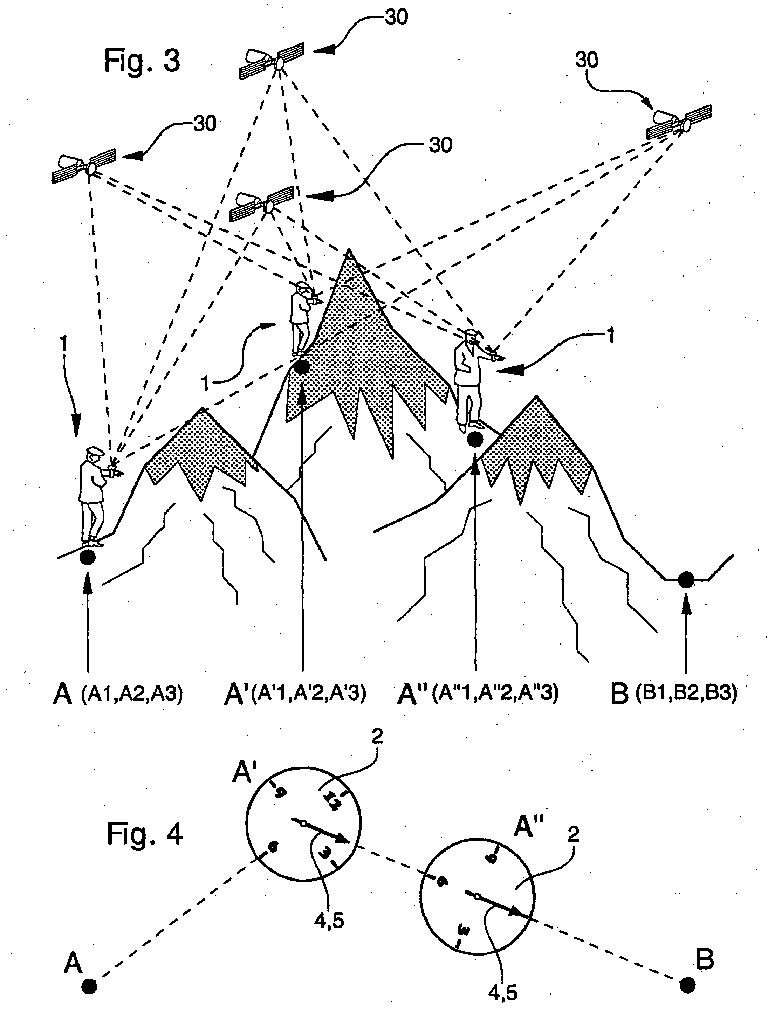

En relation avec les figures 3 et 4, le fonctionnement de la pièce d'horlogerie selon la présente invention est le suivant.

A titre illustratif, l'utilisateur muni de la montre-bracelet 1 précédemment décrite se trouve initialement à un point A, et souhaite atteindre (par exemple en marchant) un point B dont il connaît la longitude, la latitude et l'altitude, formant un triplet de coordonnées géographique désignés par (B1, B2, B3). L'utilisateur enclenche le mode de fonctionnement "direction" par les moyens de sélection 13, ce qui a pour effet, dans le mode de réalisation préféré décrit ci-dessus, d'amener les aiguilles 4 et 5 à se superposer, comme cela est décrit dans le document cité ci-dessus, afin d'indiquer qu'un nouvel état de fonctionnement a été activé. L'utilisateur introduit alors le triplet de coordonnées (B1, B2, B3) du point B, point "but", par les moyens d'introduction de données 14. L'utilisateur doit attendre d'être localisé par au moins quatre satellites par l'intermédiaire du récepteur GPS 11. Le récepteur GPS 11 stocke alors les codes d'accès auxdits satellites pour lui permettre de recevoir ultérieurement des informations, sans avoir besoin d'attendre à nouveau d'être localisé. Plus précisément, le récepteur GPS 11 reçoit les coordonnées géographiques et le temps d'au moins quatre satellites et, par un algorithme de calculs, comme cela est connu dans le document déjà cité "Radionavigation Systems" de Börje Forssell, le récepteur GPS 11 en déduit la position dudit utilisateur représentée par le triplet de coordonnées (A1, A2, A3), et fournit cette information aux moyens de traitement de données 12. Puis, il commence à marcher dans une direction quelconque, vers un point A' par exemple, et le triplet de coordonnées (A'1, A'2, A'3) est alors déterminé par le récepteur GPS 11. Le fonctionnement de la pièce d'horlogerie selon la présente invention est décrit, par exemple, en relation avec quatre satellites, puisque au moins quatre satellites sont nécessaires pour calculer le triplet de coordonnées de l'endroit où se situe le récepteur GPS 11, comme cela a été mentionné précédemment.

Ainsi, les moyens de traitement de données 12 reçoivent trois triplets de coordonnées : le triplet de coordonnées (A1, A2, A3) du point "départ", le triplet de coordonnées (A'1, A'2, A'3) du point "marche", et le triplet de coordonnées (B1, B2, B3) du point "but". Dans l'exemple décrit, l'ensemble constitué des aiguilles 4 et 5 est alors déplacé sous l'action combinée des moyens de traitement de données 12 et du moteur 15, comme cela est décrit dans la demande de brevet européen No 95120717.4. Par conséquent, si l'utilisateur utilise l'axe 6 h-12 h du cadran 2 de la montre-bracelet 1 en tant qu'axe de référence, et aligne ce dernier avec la direction dans laquelle il marche, c'est-à-dire la direction entre les points A et A', alors les aiguilles 4 et 5 vont être déplacées sous l'action combinée des moyens de traitement de données 12 et du moteur 15, d'une façon telle que décrit dans la demande de brevet européen citée ci-dessus, pour indiquer la direction dans laquelle l'utilisateur doit marcher pour atteindre le point "but", c'est-à-dire la direction entre le point A' et le point B. Ainsi, si l'utilisateur utilise l'axe 6 h-12 h du cadran 2 de la montre-bracelet 1 en tant qu'axe de référence, et aligne ce dernier avec la direction dans laquelle il marche, l'utilisateur se dirige vers le point "but", quand l'ensemble constitué des aiguilles 4 et 5 est parfaitement aligné avec l'axe 6 h-12 h, comme cela est représenté en figure 4 au point A".

A titre d'exemple, dans le cas de l'application de la présente invention décrit ci-dessus, il suffit à l'utilisateur de marcher sur une distance d'environ trente mètres, pour qu'il reçoit une indication de la direction de l'endroit "but", cette distance étant dépendante de la résolution du récepteur GPS.

A titre de variante, des modifications ou des perfectionnements peuvent être apportés à la pièce d'horlogerie décrite ci-dessus de façon détaillée.

A titre de variante, on peut munir la pièce d'horlogerie selon la présente invention en outre d'un affichage à cristaux liquides du type décrit dans la demande de brevet européen No 91108796.3 au nom d'Eta SA, de sorte qu'un tel ensemble pourvu de moyens de mémorisation permet d'afficher des positions antérieures ou prédéterminées.

A titre de variante, on peut aussi munir la pièce d'horlogerie selon la présente invention de moyens de compensation de température en combinaison avec l'horloge interne 16, par exemple en utilisant un oscillateur thermo-compensé connu sous le nom de TXCO (l'abréviation anglaise de Temperature Controlled Crystal Oscillator). Il est particulièrement avantageux d'utiliser de tels moyens de compensation avec un récepteur GPS. En effet, la recherche de satellites permettant de déterminer la position du récepteur est d'autant plus rapide que l'horloge interne est précise, la situation idéale étant l'absence de biais entre le signal d'horloge provenant d'un satellite et le signal d'horloge interne. Par conséquent, de tels moyens de compensation rendent fiables l'utilisation de la pièce d'horlogerie, même dans des milieux extrêmes.

A titre de variante, on peut munir la pièce d'horlogerie selon la présente invention d'un appareil externe susceptible d'être utilisé, par exemple, pour l'affichage d'une carte de navigation.

A titre de variante également, la pièce d'horlogerie selon la présente invention peut comporter deux moteurs à double sens, de sorte que le mouvement des aiguilles de la pièce d'horlogerie peut être plus élaboré. Le second moteur à double sens peut aussi permettre de munir la pièce d'horlogerie selon la présente invention d'une aiguille supplémentaire pour indiquer, par exemple, les secondes.

Il va de soi que l'homme de l'art peut apporter bon nombre de modifications et de perfectionnements supplémentaires à la description détaillée de la pièce d'horlogerie analogique selon la présente invention, sans sortir du cadre de la présente invention. A titre d'exemple, on peut prévoir d'utiliser un autre axe de référence que l'axe 6 h-12 h de la pièce d'horlogerie, cet autre axe étant formé par une direction affichée sur cette pièce et par la position spatiale de l'utilisateur lui-même.

## Revendications

1. Pièce d'horlogerie (7) multi-fonctions comprenant une horloge interne (16), des première et deuxième aiguilles (4, 5) d'affichage d'heure, des moyens de sélection (13) pour sélectionner des fonctions, des moyens de détermination de direction (10, 11, 12, 14) comprenant des moyens de traitement de données (12) et des moyens d'introduction de données (14) destinés à introduire les coordonnées géographiques d'un endroit "but",
lesdits moyens de détermination de direction (10, 11, 12, 14) étant en outre constitués d'un ensemble d'une antenne (10) et d'un récepteur de type GPS (11) pour déterminer les coordonnées géographiques de l'endroit où se trouve la pièce d'horlogerie (7) et pour fournir ces coordonnées géographiques aux dits moyens de traitement de données,
lesdits moyens de traitement de données (12) étant agencés de manière à déterminer une direction de mouvement de la pièce d'horlogerie à partir des coordonnées géographiques de l'endroit où se trouve actuellement la pièce d'horlogerie (7) et des coordonnées géographiques d'un endroit où se trouvait précédemment la pièce d'horlogerie (7),
cette pièce d'horlogerie étant **caractérisée en ce que** lesdits moyens de traitement de données (12) sont en outre agencés de manière à déterminer une direction de "but" à partir des coordonnées géographiques de l'endroit "but" et des coordonnées géographiques de l'endroit où se trouve actuellement la pièce d'horlogerie (7),
**en ce que** l'axe 6h-12h de ladite pièce d'horlogerie (7) est utilisé en tant qu'axe de référence qui est aligné avec ladite direction de mouvement; et
**en ce que** les première (4) et deuxième (5) aiguilles sont agencées de façon à être superposées pour pouvoir indiquer toutes deux la direction de « but » par rapport à l'axe de référence.

2. Pièce d'horlogerie (7) multi-fonctions comprenant une horloge interne (16), des première et deuxième aiguilles (4, 5) d'affichage d'heure, des moyens de sélection (13) pour sélectionner des fonctions, des moyens de détermination de direction (10, 11, 12, 14) comprenant des moyens de traitement de données (12) et des moyens d'introduction de données (14) destinés à introduire les coordonnées géographiques d'un endroit "but",
lesdits moyens de détermination de direction (10, 11, 12, 14) étant en outre constitués d'un ensemble d'une antenne (10) et d'un récepteur de type GPS (11) pour déterminer les coordonnées géographiques de l'endroit où se trouve la pièce d'horlogerie (7) et pour fournir ces coordonnées géographiques aux dits moyens de traitement de données,
lesdits moyens de traitement de données (12) étant agencés de manière à déterminer une direction de mouvement de la pièce d'horlogerie à partir des coordonnées géographiques de l'endroit où se trouve actuellement la pièce d'horlogerie (7) et des coordonnées géographiques d'un endroit où se trouvait précédemment la pièce d'horlogerie (7),
cette pièce d'horlogerie étant **caractérisée en ce que** lesdits moyens de traitement de données (12) sont en outre agencés de manière à déterminer une direction de "but" à partir des coordonnées géographiques de l'endroit "but" et des coordonnées géographiques de l'endroit où se trouve actuellement la pièce d'horlogerie (7),
**en ce que** l'axe 6h-12h de ladite pièce d'horlogerie (7) est utilisé en tant qu'axe de référence qui est aligné avec ladite direction de mouvement;
**en ce que** ladite première aiguille (4) est agencée de façon à pouvoir indiquer ladite direction de "but" par rapport au dit axe de référence; et
**en ce que** ladite deuxième aiguille (5) est agencée de façon à pouvoir indiquer la direction du nord géographique.

3. Pièce d'horlogerie (7) selon l'une quelconque des revendications précédentes, comprenant en outre des moyens de compensation de température de ladite horloge interne (16), de sorte que la pièce d'horlogerie est rendue plus fiable, un tel agencement augmentant la précision de ladite pièce d'horlogerie (7).

4. Pièce d'horlogerie (7) selon l'une quelconque des revendications précédentes, dans laquelle les moyens de traitement de données (12) sont constitués d'un microprocesseur.

5. Pièce d'horlogerie (7) selon la revendication 1 ou 2, **caractérisée en ce que** celle-ci comporte deux moteurs à double sens permettant respectivement une rotation dans les deux sens desdites première et deuxième aiguilles (4, 5).

## Claims

1. Multi-function timepiece (7) including an internal clock (16), first and second display hands (4, 5), selection means (13) for selecting functions, direction determining means (10, 11, 12, 14) including data processing means (12) and data input means (14) arranged for inputting the geographical coordinates of a "target" location,
said direction determining means (10, 11, 12, 14) being further formed of an assembly including an antenna (10) and a GPS type receiver (11) for determining the geographical coordinates of the location in which the timepiece (7) is situated and for providing these geographical coordinates to said data processing means,
said data processing means (12) being arranged to determine a direction of movement of the timepiece from geographical coordinates of the location in which the timepiece (7) is currently situated and from geographical coordinates of the location in which the timepiece (7) was previously situated,
this timepiece being **characterized in that** said data processing means (12) are further arranged to determine a "target" direction from the geographical coordinates of the "target" location and from the geographical coordinates in which the timepiece (7) is currently situated,
**in that** the 6 o'clock - 12 o'clock axis of said timepiece (7) is used as a reference axis which is aligned with said direction of movement; and
**in that** the first (4) and second (5) hands are arranged so as to be able to be superposed in order to be able to both indicate the "target" direction with respect to the reference axis.

2. Multi-function timepiece (7) including an internal clock (16), first and second display hands (4, 5), selection means (13) for selecting functions, direction determining means (10, 11, 12, 14) including data processing means (12) and data input means (14) arranged for inputting the geographical coordinates of a "target" location,
said direction determining means (10, 11, 12, 14) being further formed of an assembly including an antenna (10) and a GPS type receiver (11) for determining the geographical coordinates of the location in which the timepiece (7) is situated and for providing these geographical coordinates to said data processing means,
said data processing means (12) being arranged to determine a direction of movement of the timepiece from geographical coordinates of the location in which the timepiece (7) is currently situated and from geographical coordinates of the location in which the timepiece (7) was previously situated,
this timepiece being **characterized in that** said data processing means (12) are further arranged to determine a "target" direction from the geographical coordinates of the "target" location and from the geographical coordinates in which the timepiece (7) is currently situated,
**in that** the 6 o'clock - 12 o'clock axis of said timepiece (7) is used as a reference axis which is aligned with said direction of movement; and
**in that** said first hand (4) is arranged so as to be able to indicate the "target" direction with respect to said reference axis; and
**in that** said second hand (5) is arranged so as to be able to indicate the direction of geographical north.

3. Timepiece (7) according to any one of the preceding claims, further including means for compensating the temperature of said internal clock (16), so that the timepiece is made more reliable, such an arrangement increasing the accuracy of said timepiece (7).

4. Timepiece (7) according to any one of the preceding claims, wherein the data processing means (12) are formed by a microprocessor.

5. Timepiece (7) according to claim 1 or 2, **characterized in that** said timepiece includes two bidirectional motors for respectively moving said first and second hands (4, 5) in both directions.

## Patentansprüche

1. Multifunktionales Zeitmeßgerät (7) mit einer inneren Uhr (16), ersten und zweiten Zeigern (4, 5) zum Anzeigen der Uhrzeit, Auswählmitteln (13) zum Auswählen von Funktionen und Mitteln zur Richtungsbestimmung (10, 11, 12, 14), die Mittel zur Datenverarbeitung (12) und Mittel zur Dateneingabe (14), die zum Eingeben geographischer Koordinaten eines "Ziel"-Ortes bestimmt sind, umfassen,
wobei die Mittel zur Richtungsbestimmung (10, 11, 12, 14) unter anderem aus einer Einheit aus einer Antenne (10) und einem Empfänger vom Typ GPS (11) zum Bestimmen der geographischen Koordinaten des Ortes, an dem sich das Zeitmeßgerät (7) befindet, und zum Liefern geographischer Koordinaten an die Datenverarbeitungsmittel, gebildet sind,
wobei die Datenverarbeitungsmittel (12) zum Bestimmen einer Bewegungsrichtung des Zeitmeßgeräts ausgehend von geographischen Koordinaten des Ortes, an dem sich das Zeitmeßgerät momentan befindet, und geographischen Koordinaten eines Ortes, an dem sich das Zeitmeßgerät (7) vorher befunden hat, ausgestaltet sind,
wobei das Zeitmeßgerät **dadurch gekennzeichnet ist, daß** die Datenverarbeitungsmittel (12) zudem zum Bestimmen einer "Ziel"-Richtung ausgestaltet sind, ausgehend von geographischen Koordinaten des "Ziel"-Ortes und geographischen Koordinaten des Ortes, an dem sich das Zeitmeßgerät (7) momentan befindet,
daß die 6h-12h-Achse des Zeitmeßgeräts (7) als Referenzachse verwendet wird, die mit der Bewegungsrichtung fluchtet, und
daß der erste (4) und zweite (5) Zeiger derart ausgestaltet sind, daß sie einander überlagern, um beide zusammen die Richtung des "Ziels" relativ zur Referenzachse anzuzeigen.

2. Multifunktionales Zeitmeßgerät (7) mit einer inneren Uhr (16), ersten und zweiten Zeigern (4, 5) zum Anzeigen der Uhrzeit, Auswählmitteln (13) zum Auswählen von Funktionen und Mitteln zur Richtungsbestimmung (10, 11, 12, 14), die Mittel zur Datenverarbeitung (12) und Mittel zur Dateneingabe (14), die zum Eingeben geographischer Koordinaten eines "Ziel"-Ortes bestimmt sind, umfassen,
wobei die Mittel zur Richtungsbestimmung (10, 11, 12, 14) unter anderem aus einer Einheit aus einer Antenne (10) und einem Empfänger vom Typ GPS (11) zum Bestimmen der geographischen Koordinaten des Ortes, an dem sich das Zeitmeßgerät (7) befindet, und zum Liefern geographischer Koordinaten an die Datenverarbeitungsmittel, gebildet sind,
wobei die Datenverarbeitungsmittel (12) zum Bestimmen einer Bewegungsrichtung des Zeitmeßgeräts ausgehend von den geographischen Koordinaten des Ortes, an dem sich das Zeitmeßgerät momentan befindet, und geographischen Koordinaten eines Ortes, an dem sich das Zeitmeßgerät (7) vorher befunden hat, ausgestaltet sind,
wobei das Zeitmeßgerät **dadurch gekennzeichnet ist, daß** die Datenverarbeitungsmittel (12) zudem zum Bestimmen einer "Ziel"-Richtung ausgestaltet sind, ausgehend von geographischen Koordinaten des "Ziel"-Ortes und geographischen Koordinaten des Ortes, an dem sich das Zeitmeßgerät (7) momentan befindet,
daß die 6h-12h-Achse des Zeitmeßgeräts (7) als Referenzachse verwendet wird, die mit der Bewegungsrichtung fluchtet,
daß der erste Zeiger (4) derart ausgestaltet ist, daß er die "Ziel"-Richtung relativ zur Referenzachse anzeigen kann, und
daß der zweite Zeiger (5) derart ausgestaltet ist, daß er die Richtung des geographischen Nordens anzeigen kann.

3. Zeitmeßgerät (7) nach einem der vorhergehenden Ansprüche, das ferner Temperaturkompensationsmittel der internen Uhr (16) derart umfaßt, daß das Zeitmeßgerät zuverlässiger wird, wobei eine derartige Ausgestaltung die Genauigkeit des Zeitmeßgeräts (7) erhöht.

4. Zeitmeßgerät (7) nach einem der vorhergehenden Ansprüche, bei dem die Datenverarbeitungsmittel (12) durch einen Mikroprozessor gebildet sind.

5. Zeitmeßgerät (7) nach Anspruch 1 oder 2, **dadurch gekennzeichnet, daß** es zwei rechts- und linksdrehende Motoren umfaßt, die eine Drehung des ersten und zweiten Zeigers (4, 5) in beide Richtungen gestatten.
